# EUROPÄISCHE PATENTSCHRIFT

(11) **EP 3 224 117 B1**
(45) Veröffentlichungstag und Bekanntmachung des Hinweises auf die Patenterteilung: **05.08.2020**
(21) Anmeldenummer: 15784660.1
(22) Anmeldetag: 22.10.2015
(51) Int. Cl.: B62D 15/02, G05D 1/00, G08G 1/14, G05D 1/02

(54) **VERFAHREN UND VORRICHTUNG ZUM ASSISTIERTEN FÜHREN EINES FAHRZEUGS**
METHOD AND DEVICE FOR ASSISTED GUIDING OF A VEHICLE
PROCÉDÉ ET DISPOSITIF D'AIDE À LA CONDUITE D'UN VÉHICULE

(30) Priorität: 26.11.2014 DE 102014224075
(43) Veröffentlichungstag der Anmeldung: 04.10.2017
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2015/074487
(87) Internationale Veröffentlichungsnummer: WO 2016/083037

(56) Entgegenhaltungen:
- US-A1- 2010 156 672
- US-A1- 2012 188 100
- US-A1- 2013 231 824

## Beschreibung

Die Erfindung betrifft ein Verfahren und eine Vorrichtung zum assistierten Führen eines Fahrzeugs. Die Erfindung betrifft ferner ein Verfahren und eine Vorrichtung zum Betreiben eines Fahrzeugs. Die Erfindung betrifft des Weiteren ein Parksystem für Fahrzeuge, ein Fahrzeug sowie ein Computerprogramm.

### Stand der Technik

Die Offenlegungsschrift DE 10 2012 222 562 A1 zeigt ein System für bewirtschaftete Parkflächen zur Überführung eines Fahrzeugs von einer Startposition in eine Zielposition.

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle.

Die Offenlegungsschrift US 2010/156672 A1 ist als nächstliegender Stand der Technik nach dem Oberbegriff der Ansprüche 1 und 5 zu sehen und zeigt ein System und ein Verfahren zum automatischen Parken eines Kraftfahrzeugs.

Die Offenlegungsschrift US 2012/188100 A1 zeigt ein System zum automatischen Parken eines Kraftfahrzeugs.

Die Offenlegungsschrift US 2013/231824 A1 zeigt ein Valet-Parking-System.

### Offenbarung der Erfindung

Die der Erfindung zugrunde liegende Aufgabe kann darin gesehen werden, ein Konzept bereitzustellen, mittels welchen eine effiziente autonome Fahrt des Fahrzeugs auf einem Parkplatz ermöglicht ist.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum assistierten Führen eines Fahrzeugs bereitgestellt, wobei eine auf einem Parkplatz abzufahrende Solltrajektorie für das Fahrzeug abhängig von einem Fahrzeugtyp des Fahrzeugs ermittelt wird, wobei die ermittelte Solltrajektorie an das Fahrzeug über ein Kommunikationsnetzwerk gesendet wird, so dass das Fahrzeug basierend auf der Solltrajektorie autonom auf dem Parkplatz fahren kann.

Nach noch einem Aspekt wird eine Vorrichtung zum assistierten Führen eines Fahrzeugs bereitgestellt, umfassend einen Prozessor, der ausgebildet ist, eine auf einem Parkplatz abzufahrende Solltrajektorie für das Fahrzeug abhängig von einem Fahrzeugtyp des Fahrzeugs zu ermitteln, und eine Kommunikationsschnittstelle, die ausgebildet ist, die ermittelte Solltrajektorie an das Fahrzeug über ein Kommunikationsnetzwerk zu senden, so dass das Fahrzeug basierend auf der Solltrajektorie autonom auf dem Parkplatz fahren kann.

Gemäß einem weiteren Aspekt wird ein Verfahren zum Betreiben eines Fahrzeugs bereitgestellt, wobei vom Fahrzeug über ein Kommunikationsnetzwerk eine auf einem Parkplatz abzufahrende und von einem Fahrzeugtyp des Fahrzeugs abhängige Solltrajektorie empfangen wird, wobei das Fahrzeug basierend auf der Solltrajektorie autonom auf dem Parkplatz fährt.

Gemäß einem weiteren Aspekt wird eine Vorrichtung zum Betreiben eines Fahrzeugs bereitgestellt, umfassend eine Kommunikationsschnittstelle, die ausgebildet ist, über ein Kommunikationsnetzwerk eine auf einem Parkplatz abzufahrende und von einem Fahrzeugtyp des Fahrzeugs abhängige Solltrajektorie zu empfangen, und eine Führungseinrichtung zum Führen des Fahrzeugs, die ausgebildet ist, das Fahrzeug basierend auf der Solltrajektorie autonom auf dem Parkplatz zu führen.

Nach noch einem System wird ein Parksystem für Fahrzeuge bereitgestellt, wobei das Parksystem einen Parkplatz und die Vorrichtung zum assistierten Führen eines Fahrzeugs umfasst.

Nach noch einem Aspekt wird ein Fahrzeug bereitgestellt, welches die Vorrichtung zum Betreiben eines Fahrzeugs umfasst.

Gemäß einem weiteren Aspekt wird ein Computerprogramm bereitgestellt, welches Programmcode zur Durchführung des Verfahrens zum assistierten Führen eines Fahrzeugs und/oder zum Betreiben eines Fahrzeugs umfasst, wenn das Computerprogramm auf einem Computer ausgeführt wird.

Die Erfindung umfasst also insbesondere den Gedanken, eine Solltrajektorie für das Fahrzeug in Abhängigkeit von dem Fahrzeugtyp des Fahrzeugs zu ermitteln. Das heißt also, dass konkret für das Fahrzeug eine auf das Fahrzeug zugeschnittene und optimale Solltrajektorie ermittelt wird, die das Fahrzeug auf dem Parkplatz abfahren soll. Es ist also erfindungsgemäß nicht vorgesehen, eine allgemeine gemeinsame Solltrajektorie für mehrere verschiedene Fahrzeuge zu ermitteln. Vielmehr wird für jedes einzelne Fahrzeug abhängig von seinem Fahrzeugtyp eine eigene Solltrajektorie ermittelt. Dadurch kann in vorteilhafter Weise eine Solltrajektorie für das Fahrzeug optimiert werden. Insbesondere können dadurch in vorteilhafter Weise Besonderheiten des konkret auf dem Parkplatz fahrenden Fahrzeugs berücksichtigt werden. Somit ist in vorteilhafter Weise insbesondere eine effiziente autonome Fahrt des Fahrzeugs auf dem Parkplatz ermöglicht.

Nach einer Ausführungsform umfasst das Kommunikationsnetzwerk ein WLAN-Netzwerk und/oder ein Mobilfunknetzwerk.

In einer Ausführungsform wird respektive ist eine Kommunikation über das Kommunikationsnetzwerk verschlüsselt.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Autonom im Sinne der vorliegenden Erfindung bedeutet insbesondere, dass das Fahrzeug selbstständig, also ohne einen Eingriff eines Fahrers, auf dem Parkplatz navigiert oder fährt oder geführt wird. Das Fahrzeug fährt also selbstständig auf dem Parkplatz, ohne dass ein Fahrer hierfür das Fahrzeug steuern oder sich in dem Fahrzeug befinden müsste. Ein Führen umfasst insbesondere eine Quer- und/oder eine Längsführung des Fahrzeugs. Ein solch autonom fahrendes Fahrzeug, das automatisch ein- und ausparken kann, wird beispielsweise als ein AVP-Fahrzeug bezeichnet. AVP steht für "automatic valet parking" und kann mit "automatischer Parkvorgang" übersetzt werden. Fahrzeuge, die diese AVP-Funktionalität nicht aufweisen, werden beispielsweise als normale Fahrzeuge bezeichnet.

Eine Abgabeposition im Sinne der vorliegenden Erfindung, ist eine Position, an welcher ein Fahrer des Fahrzeugs sein Fahrzeug für einen autonomen Parkvorgang abstellen kann und von dieser sein Fahrzeug zu einem späteren Zeitpunkt wieder abholen kann.

Eine Parkposition im Sinne der vorliegenden Erfindung ist eine Position, an welcher das Fahrzeug autonom parken soll.

Eine Abholposition im Sinne der vorliegenden Erfindung, ist eine Position, an welcher ein Fahrzeug nach einem Ende eines autonomen Parkvorgangs abholen kann.

Nach einer Ausführungsform ist die Abgabeposition gleich der Abholposition.

In einer Ausführungsform ist vorgesehen, dass das Fahrzeug autonom von der Abgabeposition zu der Parkposition navigiert oder fährt.

In einer weiteren Ausführungsform ist vorgesehen, dass das Fahrzeug autonom in die Parkposition einparkt.

In einer anderen Ausführungsform ist vorgesehen, dass das Fahrzeug autonom aus der Parkposition ausparkt.

Nach einer weiteren Ausführungsform ist vorgesehen, dass das Fahrzeug autonom von der Parkposition zu der Abholposition navigiert oder fährt.

Nach einer Ausführungsform ist vorgesehen, dass die Solltrajektorie ferner abhängig von zumindest einem der folgenden Fahrzeugparameter ermittelt wird: Radstand, Höhe, Breite, Länge, Masse, Funktionsumfang eines Fahrerassistenzsystems, Funktionsumfang einer Umfeldsensorik, maximaler Radeinschlagwinkel, Wendekreis, Ungenauigkeit eines Fahrerassistenzsystems und Ungenauigkeit einer Umfeldsensorik, jeweiliger Typ und/oder eine jeweilige Ungenauigkeit von einem oder mehreren Aktuatoren, beispielsweise Bremse, Lenkung, Antrieb, und/oder von einer Verarbeitungseinrichtung zum Berechnen von Ansteuerungsparametern für einen oder mehrere Aktuatoren, um die Solltrajektorie abfahren zu können.

Dadurch wird insbesondere der technische Vorteil bewirkt, dass die Solltrajektorie noch besser an das Fahrzeug angepasst werden kann. Somit kann eine verbesserte effiziente autonome Navigation des Fahrzeugs auf dem Parkplatz in vorteilhafter Weise ermöglicht werden.

Der Funktionsumfang einer Umfeldsensorik umfasst beispielsweise eine Reichweite eines Umfeldsensors. Also zum Beispiel eine Reichweite eines Videosensors, eines Radarsensors, eines Ultraschallsensors, eines Lasersensors oder eines Lidarsensors. So nimmt in der Regel eine Genauigkeit einer Kamera umfassend einen Videosensor mit der Entfernung ab.

Der Funktionsumfang einer Umfeldsensorik umfasst zum Beispiel eine Sensorempfindlichkeit eines Umfeldsensors.

Da in der Regel ein Fahrerassistenzsystem Umfeldsensordaten einer Umfeldsensorik für die Ausführung einer Fahrerassistenzfunktion verwendet, ist über den Funktionsumfang der Umfeldsensorik auch ein Funktionsumfang des Fahrerassistenzsystems definiert.

Der Funktionsumfang eines Fahrerassistenzsystems umfasst zum Beispiel eine Reaktionsgeschwindigkeit auf ein Ereignis, wie zum Beispiel das Auftreten eines Hindernisses.

Gemäß einer weiteren Ausführungsform sind mehrere Fahrzeugparameter vorgesehen.

Der Motion Control Regler ist eine Verarbeitungseinrichtung, welche die Umsetzung einer Solltrajektorie, das heißt, wie müssen einzelne Aktuatoren (Bremse, Lenkung, Antrieb) angesteuert werden, damit die Solltrajektorie abgefahren wird, berechnet. Das heißt, dass die Verarbeitungseinrichtung zum Berechnen von Ansteuerungsparametern für einen oder mehrere Aktuatoren, um die Solltrajektorie abfahren zu können, ausgebildet ist.

Der Fahrzeugtyp umfasst nach einer Ausführungsform das Baujahr des Fahrzeugs.

Der Fahrzeugtyp umfasst nach einer weiteren Ausführungsform eine Herstellerkennung eines Herstellers des Fahrzeugs.

Erfindungsgemäß ist vorgesehen, dass zumindest ein Lokalisierungssynchronisationsort ermittelt wird, mittels welchen das Fahrzeug überprüfen kann, ob es die ermittelte Solltrajektorie korrekt abfährt, wobei der Lokalisierungssynchronisationsort über das Kommunikationsnetzwerk an das Fahrzeug gesendet wird, so dass das Fahrzeug beim Abfahren der Solltrajektorie mittels des Lokalisierungssynchronisationsorts überprüfen kann, ob es die Solltrajektorie korrekt abfährt.

Dadurch wird insbesondere der technische Vorteil bewirkt, dass das Fahrzeug erkennen kann, wenn es die Solltrajektorie nicht mehr korrekt abfährt. Das Fahrzeug kann dann die Abweichung korrigieren. Dadurch ist eine verbesserte autonome Fahrt des Fahrzeugs auf dem Parkplatz ermöglicht.

Erfindungsgemäß ist vorgesehen, dass das Ermitteln des Lokalisierungssynchronisationsorts umfasst, dass Positionsdaten des Lokalisierungssynchronisationsorts relativ zu der Solltrajektorie ermittelt werden.

Dadurch wird insbesondere der technische Vorteil bewirkt, dass das Fahrzeug bezogen auf die abzufahrende Solltrajektorie erkennen kann, ob es diese korrekt abfährt oder nicht. Denn der Lokalisierungssynchronisationsort wird bezogen auf die Solltrajektorie angegeben.

So ist beispielsweise nach einer Ausführungsform vorgesehen, dass folgende Information einem Lokalisierungssynchronisationsort zugeordnet ist: An einem definierten Punkt der Solltrajektorie ist der Lokalisierungssynchronisationsort in einer bestimmten Entfernung in Richtung einer Abszisse eines kartesischen Koordinatensystems und in einer vorbestimmten Entfernung in Richtung einer Ordinate des kartesischen Koordinatensystems und/oder ein Winkel zwischen der Strecke oder Geraden, die den vorbestimmten Punkt der Solltrajektorie mit dem Lokalisierungssynchronisationsort verbindet und einer der beiden Achsen des kartesischen Koordinatensystems, also der Abszisse oder der Koordinate, weist einen vorbestimmten Winkelwert auf. Zum Beispiel ist dem Lokalisierungssynchronisationsort zugeordnet, wie groß der Abstand (Luftlinie) zwischen dem definierten Punkt der Solltrajektorie und dem Lokalisierungssynchronisationsort ist.

Das kartesische Koordinatensystem ist beispielsweise das Weltkoordinatensystem oder das Fahrzeugkoordinatensystem oder das Kartenkoordinatensystem. Das kartesische Koordinatensystem ist zum Beispiel ein Koordinatensystem in Bezug auf die Solltrajektorie.

Nach einer weiteren Ausführungsform ist vorgesehen, dass zumindest ein Teilstück der ermittelten Solltrajektorie vor einem Übermitteln durch eine Gerade oder eine Folge von Punkten approximiert wird, so dass anstelle der ermittelten Solltrajektorie die Solltrajektorie mit dem approximierten Teilstück an das Fahrzeug über das Kommunikationsnetzwerk gesendet wird.

Dadurch wird insbesondere der technische Vorteil bewirkt, dass aufgrund der Approximation weniger Daten an das Fahrzeug über das Kommunikationsnetzwerk gesendet werden müssen. Es kann also ein zu übertragendes Datenvolumen reduziert werden. Die Kommunikation über das Kommunikationsnetzwerk kann somit in vorteilhafter Weise besonders effizient durchgeführt werden.

Nach einer Ausführungsform werden mehrere Teilstücke entsprechend der vorstehend gemachten Ausführungen approximiert. So ist beispielsweise vorgesehen, dass ein Teilstück durch eine Gerade approximiert wird. Ein anderes Teilstück wird vorzugsweise durch eine Folge von Punkten approximiert. Teilstücke der Solltrajektorie, die nicht approximiert werden, werden als Ganzes, also als ganzes Teilstück, also als nicht approximiertes Teilstück, über das Kommunikationsnetzwerk an das Fahrzeug gesendet.

Nach einer Ausführungsform sind mehrere Lokalisierungssynchronisationsorte vorgesehen.

Nach noch einer Ausführungsform ist vorgesehen, dass die Solltrajektorie zumindest eine der folgenden Orte auf dem Parkplatz umfasst: Abgabeposition, an welcher ein Fahrer des Fahrzeugs sein Fahrzeug für einen autonomen Parkvorgang abgeben kann, Parkposition, in welcher das Fahrzeug auf der Parkplatz parkt, Abholposition, an welcher ein Fahrer des Fahrzeugs nach Ende eines autonomen Parkvorgangs abholen kann.

Das heißt also, dass abhängig davon, welche der vorstehend genannten Orte die Solltrajektorie umfasst, das Fahrzeug mittels des autonomen Abfahrens der Solltrajektorie von der Abgabeposition zu der Parkposition autonom fahren kann. Insbesondere kann das Fahrzeug dort autonom, also in die Parkposition, einparken. Insbesondere kann das Fahrzeug aus der Parkposition ausparken. Insbesondere kann das Fahrzeug autonom von der Parkposition zu der Abholposition fahren, die beispielsweise der Abgabeposition entspricht.

Das heißt also, dass durch das Abfahren der Solltrajektorie ein automatischer Parkvorgang, ein sogenanntes Automatic Valet Parking (AVP), bewirkt werden kann.

Hierbei wird das Fahrzeug bei seiner autonomen Fahrt so weit assistiert, insofern dem Fahrzeug die abzufahrende Solltrajektorie über das Kommunikationsnetzwerk übermittelt wird. Das Fahrzeug fährt selbstständig, also autonom, auf dem Parkplatz basierend auf der übermittelten Solltrajektorie. Es findet hier insbesondere keine Fernsteuerung des Fahrzeugs statt.

Erfindungsgemäß ist vorgesehen, dass davon abgesehen wird, eine digitale Karte des Parkplatzes an das Fahrzeug über das Kommunikationsnetzwerk zu senden.

Dadurch wird insbesondere der technische Vorteil bewirkt, dass noch weniger Daten an das Fahrzeug übertragen werden müssen. Eine digitale Karte weist in der Regel eine erhebliche Größe auf, sodass die entsprechenden Kartendaten Speicherplatz benötigen. Insbesondere würde eine Übertragung einer solchen digitalen Karte in der Regel eine gewisse Zeit in Anspruch nehmen. Dadurch aber, dass davon abgesehen wird, eine solche digitale Karte an das Fahrzeug zu senden, können in vorteilhafter Weise ein Datenübertragungsvolumen und ein Speicherbedarf eingespart oder reduziert werden. Das heißt also, dass das Fahrzeug insbesondere keinen Speicher für die digitale Karte des Parkplatzes reservieren muss.

Nach einer Ausführungsform ist vorgesehen, dass die Vorrichtung zum assistierten Führen eines Fahrzeugs eingerichtet oder ausgebildet ist, das Verfahren zum assistierten Führen eines Fahrzeugs aus- oder durchzuführen.

Nach einer Ausführungsform ist vorgesehen, dass die Vorrichtung zum Betreiben eines Fahrzeugs eingerichtet oder ausgebildet ist, das Verfahren zum Betreiben eines Fahrzeugs aus- oder durchzuführen.

Nach einer weiteren Ausführungsform ist vorgesehen, dass das Fahrzeug eingerichtet oder ausgebildet ist, das Verfahren zum Betreiben eines Fahrzeugs aus- oder durchzuführen.

Nach einer Ausführungsform ist vorgesehen, dass die Parkposition abhängig von dem Fahrzeugtyp ermittelt wird. Dadurch kann insbesondere der technische Vorteil bewirkt werden, dass das Fahrzeug auf dem Parkplatz in einer für ihn optimierten Parkposition passt. Denn nicht jeder Fahrzeugtyp passt üblicherweise in jede Parkposition gleich gut. So kann zum Beispiel eine Säule nahe einer Parkposition das Einparken oder das Ausparken von einem Geländewagen deutlich erschweren, wohingegen ein Kleinwagen damit in der Regel keine Probleme hat.

In einer Ausführungsform ist vorgesehen, dass die Parkposition abhängig von zumindest einem der folgenden Fahrzeugparameter ermittelt wird: Radstand, Höhe, Breite, Länge, Masse, Funktionsumfang eines Fahrerassistenzsystems, Funktionsumfang einer Umfeldsensorik, maximaler Radeinschlagwinkel, Wendekreis, Ungenauigkeit eines Fahrerassistenzsystems und Ungenauigkeit einer Umfeldsensorik. Dadurch kann noch passender die Parkposition für das Fahrzeug ausgewählt werden.

In einer Ausführungsform umfasst das Ermitteln der Parkposition ein Auswählen einer Parkposition aus einer Vielzahl von Parkpositionen des Parkplatzes.

Nach einer Ausführungsform wird eine autonome Fahrt des Fahrzeugs auf dem Parkplatz mittels eines fahrzeugexternen Überwachungssystems überwacht.

Das Überwachungssystem umfasst nach einer Ausführungsform eine oder mehrere Videokameras und/oder einen mehrere Radarsensoren und/oder einen oder mehrere Ultraschallsensoren und/oder einen oder mehrere Lidarsensoren und/oder einen oder mehrere Lasersensoren und/oder eine oder mehrere Lichtschranken und/oder einen oder mehrere Türöffnungssensoren.

Funktionalitäten der Verfahren ergeben sich analog aus entsprechenden Funktionalitäten der Vorrichtungen und umgekehrt. Das heißt also, dass sich Verfahrensmerkmale analog aus entsprechenden Vorrichtungsmerkmalen und umgekehrt ergeben. Das heißt also insbesondere, dass, wenn ein Merkmal im Zusammenhang mit dem Verfahren oder der Vorrichtung zum assistierten Führen eines Fahrzeugs beschrieben ist, dieses Merkmal analog in Ausführungsformen des Verfahrens und der Vorrichtung zum Betreiben eines Fahrzeugs vorgesehen sein kann und umgekehrt.

Die Erfindung wird im Folgenden anhand von bevorzugten Ausführungsbeispielen näher erläutert. Hierbei zeigen
Fig. 1 ein Ablaufdiagramm eines Verfahrens zum assistierten Führen eines Fahrzeugs,
Fig. 2 eine Vorrichtung zum assistierten Führen eines Fahrzeugs,
Fig. 3 ein Ablaufdiagramm eines Verfahrens zum Betreiben eines Fahrzeugs,
Fig. 4 eine Vorrichtung zum Betreiben eines Fahrzeugs,
Fig. 5 ein Parksystem für Fahrzeuge,
Fig. 6 ein Fahrzeug,
Fig. 7 ein Parkplatz,
Fig. 8 der Parkplatz gemäß Fig. 7 umfassend Lokalisierungssynchronisationsorte,
Fig. 9 eine Solltrajektorie,
Fig. 10 die Solltrajektorie der Fig. 9, die durch eine Folge von Punkten approximiert ist, und
Fig. 11 die Trajektorie der Fig. 9, die mittels einer Folge von Geraden approximiert ist.

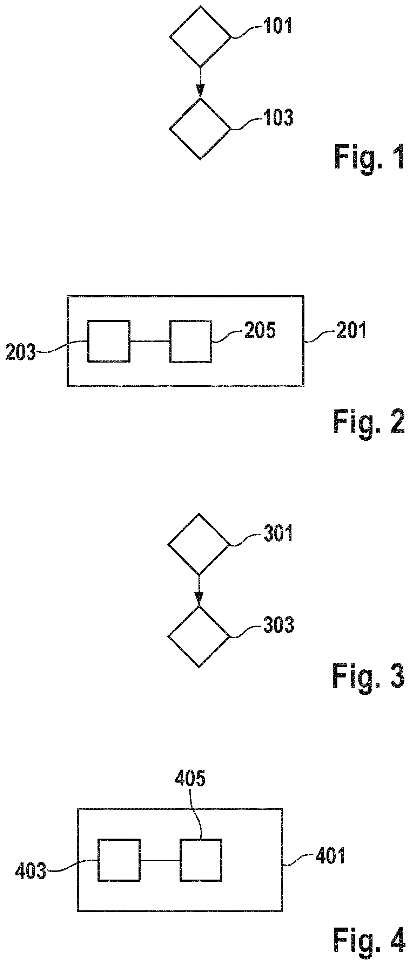

Fig. 1 zeigt ein Ablaufdiagramm eines Verfahrens zum assistierten Führen eines Fahrzeugs.

Gemäß einem Schritt 101 wird eine auf einem Parkplatz abzufahrende Solltrajektorie für das Fahrzeug abhängig von einem Fahrzeugtyp des Fahrzeugs ermittelt. In einem Schritt 103 wird die ermittelte Solltrajektorie an das Fahrzeug über ein Kommunikationsnetzwerk gesendet. Dadurch wird insbesondere der technische Vorteil bewirkt, dass das Fahrzeug basierend auf der Solltrajektorie autonom auf dem Parkplatz fahren kann. Das Fahrzeug ist beispielsweise ein AVP-Fahrzeug.

Fig. 2 zeigt eine Vorrichtung 201 zum assistierten Führen eines Fahrzeugs.

Die Vorrichtung 201 umfasst einen Prozessor 203, der ausgebildet ist, eine auf einem Parkplatz abzufahrende Solltrajektorie für das Fahrzeug abhängig von einem Fahrzeugtyp des Fahrzeugs zu ermitteln. Die Vorrichtung 201 umfasst ferner eine Kommunikationsschnittstelle 205, die ausgebildet ist, die ermittelte Solltrajektorie an das Fahrzeug über ein Kommunikationsnetzwerk zu senden, sodass das Fahrzeug basierend auf der Solltrajektorie autonom auf dem Parkplatz fahren kann.

Fig. 3 zeigt ein Ablaufdiagramm eines Verfahrens zum Betreiben eines Fahrzeugs.

Gemäß einem Schritt 301 wird vom Fahrzeug über ein Kommunikationsnetzwerk eine auf einem Parkplatz abzufahrende und von einem Fahrzeugtyp des Fahrzeugs abhängige Solltrajektorie empfangen. In einem Schritt 303 ist vorgesehen, dass das Fahrzeug basierend auf der Solltrajektorie autonom auf dem Parkplatz fährt.

Die Solltrajektorie umfasst nach einer Ausführungsform einen oder mehrere Lokalisierungssynchronisationsorte, mittels welchen das Fahrzeug beim Abfahren der Solltrajektorie überprüfen kann, ob es die Solltrajektorie korrekt abfährt oder nicht.

Fig. 4 zeigt eine Vorrichtung 401 zum Betreiben eines Fahrzeugs.

Die Vorrichtung 401 umfasst eine Kommunikationsschnittstelle 403, die ausgebildet ist, über ein Kommunikationsnetzwerk eine auf einem Parkplatz abzufahrende und von einem Fahrzeugtyp des Fahrzeugs abhängige Solltrajektorie zu empfangen. Die Vorrichtung 401 umfasst ferner eine Führungseinrichtung 405 zum Führen des Fahrzeugs, die ausgebildet ist, das Fahrzeug basierend auf der Solltrajektorie autonom auf dem Parkplatz zu führen.

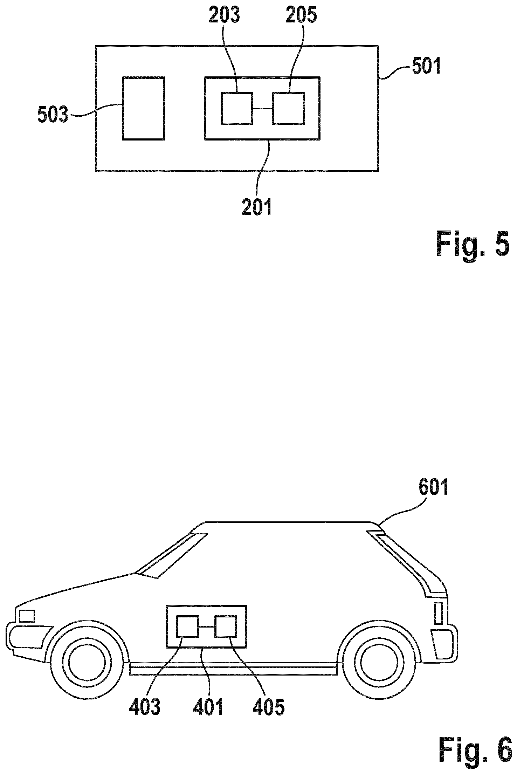

Fig. 5 zeigt ein Parksystem 501 für Fahrzeuge.

Das Parksystem 501 umfasst einen Parkplatz 503 und die Vorrichtung 201 der Fig. 2.

Fig. 6 zeigt ein Fahrzeug 601.

Das Fahrzeug 601 umfasst die Vorrichtung 401 der Fig. 4.

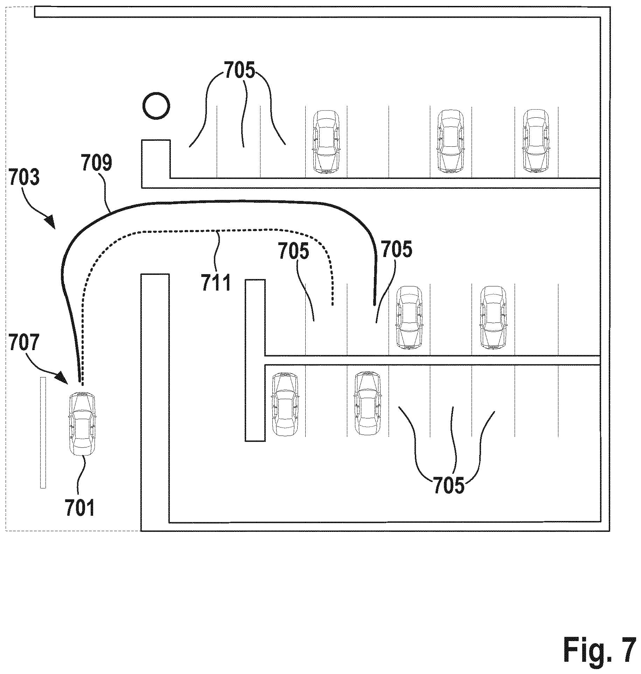

Fig. 7 zeigt ein Fahrzeug 701, welches sich auf einem Parkplatz 703 befindet. Das Fahrzeug 701 ist an einer Abgabeposition oder an einem Abgabeort 707 abgestellt worden. Von dort wird das Fahrzeug 701 autonom zu einer Parkposition fahren, die einer der vielen Parkfläche 705 des Parkplatzes 703 zugeordnet ist. Das heißt also, dass das Fahrzeug zu einer Parkfläche 705 autonom fahren wird, um dort zu parken. Dies führt das Fahrzeug autonom, also selbstständig, durch.

Für die autonome Fahrt des Fahrzeugs 701 von der Abgabeposition 707 zu der Parkfläche 705, also zu seiner Parkposition, wird eine Solltrajektorie ermittelt, die abhängig von einem Fahrzeugtyp des Fahrzeugs 701 ist. Beispielhaft sind zwei abzufahrende Solltrajektorien 709 und 711 eingezeichnet. So ist beispielsweise vorgesehen, dass die Solltrajektorie 711 ermittelt wird, wenn es sich bei dem Fahrzeug 701 um ein verhältnismäßig kleines Fahrzeug handelt, zum Beispiel einen "Mini". Die Solltrajektorie 709 wird beispielsweise für ein Fahrzeug ermittelt werden, welches im Vergleich zu dem Fahrzeug entsprechend der Solltrajektorie 711 größer ist, zum Beispiel, wenn das Fahrzeug ein "Audi A8" ist. Das heißt also insbesondere, dass der Fahrzeugtyp ein Modell des Fahrzeugs, insbesondere zusätzlich noch ein Baujahr, umfasst.

Wie die Fig. 7 exemplarisch zeigt, führt die Solltrajektorie 711 enger als die Solltrajektorie 709 zu einer Parkposition. Dies ist insbesondere deshalb möglich, da ein kleineres Fahrzeug üblicherweise einen kleineren Wendekreis hat und insbesondere weniger Platz zum Rangieren oder Manövrieren braucht.

Es wird angemerkt, dass die beiden ermittelten Solltrajektorien 709 und 711 lediglich Beispiele sind. Für andere Fahrzeugtypen sind beispielsweise andere Solltrajektorien vorgesehen.

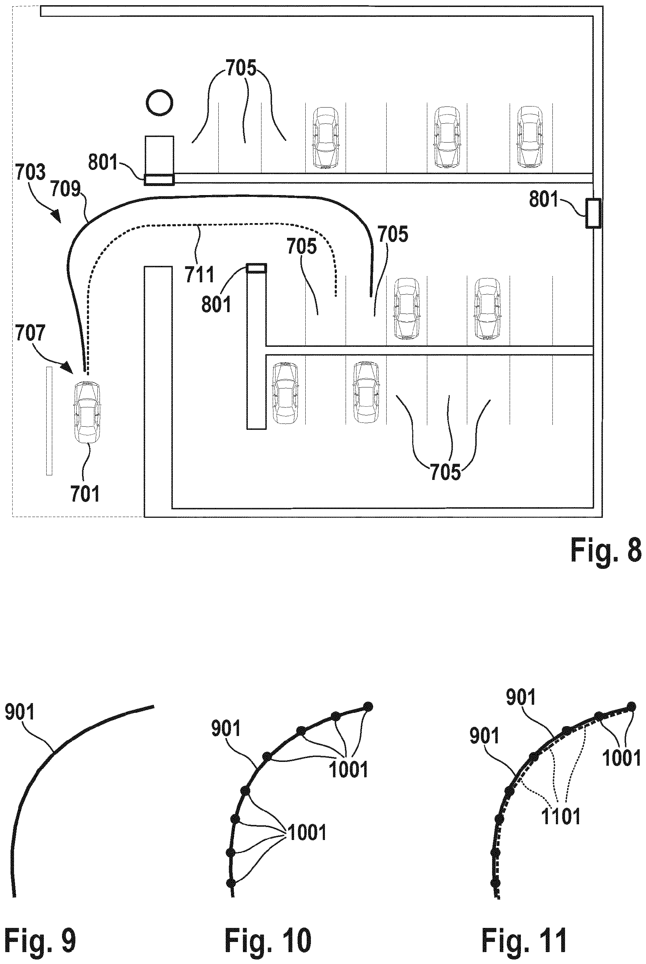

Fig. 8 zeigt den Parkplatz 703 gemäß Fig. 7 umfassend zusätzlich noch Lokalisierungssynchronisationsorte 801. Diese Lokalisierungssynchronisationsorte 801 befinden sich an mehreren Orten des Parkplatzes und dienen zur Synchronisation oder zur Überprüfung dahingehend, ob das Fahrzeug korrekt seine ihm übermittelte Solltrajektorie abfährt oder nicht. Das heißt also, dass das Fahrzeug beim Abfahren seiner Solltrajektorie überprüfen kann, ob es diese korrekt abfährt. Dies also mittels der Lokalisierungssynchronisationsorte.

Diese Lokalisierungssynchronisationsorte 801 sind beispielsweise auf die entsprechende Solltrajektorie, zum Beispiel die Solltrajektorie 709 oder 711, bezogen. So kann zum Beispiel einem Lokalisierungssynchronisationsort folgende Information zugeordnet sein: An einem bestimmten Punkt der Solltrajektorie 709 respektive 711 ist der Lokalisierungssynchronisationsort x Meter in Richtung einer X-Achse und y Meter in Richtung einer Y-Achse entfernt und/oder beträgt ein Winkel zwischen dem bestimmten Punkt der Solltrajektorie 709 respektive 711 und einer der X-Achse und Y-Achse einen vorbestimmten Winkelwert. Die X-Achse und die Y-Achse bezeichnen hier eine Abszisse respektive Ordinate eines kartesischen Koordinatensystems. Das kartesische Koordinatensystem ist zum Beispiel ein Fahrzeugkoordinatensystem. Die X-Achse verläuft in Richtung der Querachse des Fahrzeugs. Die Y-Achse verläuft in Richtung der Längsachse des Fahrzeugs, also in Fahrtrichtung.

Die ermittelte Solltrajektorie kann dem Fahrzeug 701 gemäß verschiedenen Ausführungsformen übermittelt werden. Dies wird beispielhaft durch die Figuren 9 bis 11 dargestellt.

So zeigt die Fig. 9 eine ermittelte Solltrajektorie 901, die als Ganzes, also ohne irgendwelche Approximation, dem Fahrzeug über das Kommunikationsnetzwerk übermittelt wird.

Fig. 10 zeigt die Solltrajektorie 901, die gemäß Fig. 10 durch eine Folge oder Reihe von Punkten 1001 approximiert ist. Das heißt also, dass gemäß Fig. 10 die ermittelte Solltrajektorie 901 durch eine Folge oder Reihe von Punkten 1001 repräsentiert wird. Gemäß dieser Ausführungsform ist beispielsweise vorgesehen, dass diese approximierte Solltrajektorie, also diese Reihe an Punkten 1001, dem Fahrzeug übermittelt wird. Dies kann in vorteilhafter Weise ein zu übertragendes Datenvolumen reduzieren.

Fig. 11 zeigt die Solltrajektorie 901, die mittels einer Folge von Geraden 1101 approximiert ist. Das heißt also, dass die Folge oder Reihe von Geraden 1101 die Solltrajektorie 901 repräsentiert. Die entsprechend approximierte Solltrajektorie, also die Reihe oder Folge von Geraden 1101, wird dem Fahrzeug übermittelt. Zum Vergleich sind in Fig. 11 noch zusätzlich die Punkte 1001 gemäß Fig. 10 eingezeichnet.

In weiteren Ausführungsformen sind Kombinationen der in Fig. 9 bis 11 gezeigten Möglichkeiten vorgesehen. So ist beispielsweise vorgesehen, dass ein oder mehrere Teilstücke der Solltrajektorie 901 mittels einer Reihe oder Folge von Punkten analog zu Fig. 10 approximiert werden respektive sind. Vorzugsweise sind ein oder mehrere Teilstücke der Solltrajektorie 901 analog zu Fig. 11 mittels einer Reihe oder Folge von Geraden approximiert. Vorzugsweise sind ein oder mehrere Teilstücke der Solltrajektorie 901 nicht approximiert, diese Teilstücke werden also als Ganzes an das Fahrzeug übertragen.

Die Erfindung umfasst also insbesondere den Gedanken, ein technisches und effizientes Konzept bereitzustellen, mittels welchen ein autonomes Valet Parking mit Fahrzeugen durchgeführt werden kann. Der erfindungsgemäße Kerngedanke ist insbesondere, dass, beispielsweise mittels eines Parkplatzverwaltungssystems, vor der Durchführung des autonomen Valet Parking speziell für das Fahrzeug und insbesondere speziell für die Parkposition, zum Beispiel speziell für die Parkbucht, eine Gesamttrajektorie, also die abzufahrende Solltrajektorie, berechnet oder ermittelt wird. Diese ermittelte Gesamttrajektorie fährt das Fahrzeug dann selbstständig ab, also nicht ferngesteuert.

Speziell bedeutet im Sinne dieser vorliegenden Erfindung insbesondere, dass für jedes Fahrzeug (zum Beispiel "Audi A8", "Mini", "Golf", "Passat" usw.) und insbesondere für jedes Modell (zum Beispiel "Audi A8, Modelljahr 2011") eine angepasste Solltrajektorie berechnet wird. In die Solltrajektorienberechnung oder Solltrajektorienermittlung werden vorzugsweise die Spezifikationen des Fahrzeugs, wie zum Beispiel ein Radstand, ein Motion Control Regler, usw. so wie beispielsweise die Parameter wie zum Beispiel eine Höhe, eine Breite und eine Länge integriert. Vorzugsweise werden bei der Trajektorienberechnung zusätzlich oder anstelle noch Ungenauigkeiten der Fahrzeugsysteme, insbesondere der Fahrerassistenzsysteme und/oder einer Umfeldsensorik, mitberücksichtigt.

Der Motion Control Regler ist eine Verarbeitungseinrichtung, welche die Umsetzung einer Solltrajektorie, das heißt, wie müssen einzelne Aktuatoren (Bremse, Lenkung, Antrieb) angesteuert werden, damit die Solltrajektorie abgefahren wird, berechnet. Das heißt, dass die Verarbeitungseinrichtung zum Berechnen von Ansteuerungsparametern für einen oder mehrere Aktuatoren, um die Solltrajektorie abfahren zu können, ausgebildet ist.

Nach einer Ausführungsform ist vorgesehen, dass die Umfeldsensorik des Fahrzeugs einen oder mehrere Umfeldsensoren umfasst, wie zum Beispiel: Radarsensor, Ultraschallsensor, Lidarsensor, Lasersensor und Videosensor.

Die Vorteile des erfindungsgemäßen Konzepts liegen insbesondere darin, dass sehr viel weniger Informationen im Gegensatz zu einer hochgenauen Karte übertragen werden müssen. Insbesondere muss das Fahrzeug von einem Parkhausverwaltungssystem nicht ferngesteuert werden, sondern fährt selbstständig, also autonom. Das Parkhausverwaltungssystem wird somit in vorteilhafter Weise von dieser Aufgabe entlastet.

## Patentansprüche

1. Verfahren zum assistierten Führen eines Fahrzeugs (601), wobei eine auf einem Parkplatz abzufahrende Solltrajektorie für das Fahrzeug (601) abhängig von einem Fahrzeugtyp des Fahrzeugs (601) ermittelt (101) wird, wobei die ermittelte Solltrajektorie an das Fahrzeug (601) über ein Kommunikationsnetzwerk gesendet (103) wird, so dass das Fahrzeug (601) basierend auf der Solltrajektorie autonom auf dem Parkplatz fahren kann, wobei zumindest ein Lokalisierungssynchronisationsort ermittelt wird, mittels welchen das Fahrzeug (601) überprüfen kann, ob es die ermittelte Solltrajektorie korrekt abfährt, wobei der Lokalisierungssynchronisationsort über das Kommunikationsnetzwerk an das Fahrzeug (601) gesendet wird, so dass das Fahrzeug (601) beim Abfahren der Solltrajektorie mittels des Lokalisierungssynchronisationsorts überprüfen kann, ob es die Solltrajektorie korrekt abfährt, wobei das Ermitteln des Lokalisierungssynchronisationsorts umfasst, dass Positionsdaten des Lokalisierungssynchronisationsorts relativ zu der Solltrajektorie ermittelt werden, **dadurch gekennzeichnet, dass** davon abgesehen wird, eine digitale Karte des Parkplatzes an das Fahrzeug (601) über das Kommunikationsnetzwerk zu senden.

2. Verfahren nach Anspruch 1, wobei die Solltrajektorie ferner abhängig von zumindest einem der folgenden Fahrzeugparameter ermittelt wird: Radstand, Höhe, Breite, Länge, Masse, Funktionsumfang eines Fahrerassistenzsystems, Funktionsumfang einer Umfeldsensorik, maximaler Radeinschlagwinkel, Wendekreis, Ungenauigkeit eines Fahrerassistenzsystems und Ungenauigkeit einer Umfeldsensorik, jeweiliger Typ und/oder eine jeweilige Ungenauigkeit von einem oder mehreren Aktuatoren, beispielsweise Bremse, Lenkung, Antrieb, und/oder von einer Verarbeitungseinrichtung zum Berechnen von Ansteuerungsparametern für einen oder mehrere Aktuatoren, um die Solltrajektorie abfahren zu können.

3. Verfahren nach einem der vorherigen Ansprüche, wobei zumindest ein Teilstück der ermittelten Solltrajektorie vor einem Übermitteln durch eine Gerade oder eine Folge von Punkten approximiert wird, so dass anstelle der ermittelten Solltrajektorie die Solltrajektorie mit dem approximierten Teilstück an das Fahrzeug (601) über das Kommunikationsnetzwerk gesendet wird.

4. Verfahren nach einem der vorherigen Ansprüche, wobei die Solltrajektorie zumindest eine der folgenden Orte auf dem Parkplatz umfasst:
Abgabeposition, an welcher ein Fahrer des Fahrzeugs (601) sein Fahrzeug (601) für einen autonomen Parkvorgang abgeben kann, Parkposition, in welcher das Fahrzeug (601) auf der Parkplatz parkt, Abholposition, an welcher ein Fahrer des Fahrzeugs (601) nach Ende eines autonomen Parkvorgangs abholen kann.

5. Vorrichtung (201) zum assistierten Führen eines Fahrzeugs (601), umfassend einen Prozessor (203), der ausgebildet ist, eine auf einem Parkplatz abzufahrende Solltrajektorie für das Fahrzeug (601) abhängig von einem Fahrzeugtyp des Fahrzeugs (601) zu ermitteln, und eine Kommunikationsschnittstelle (205), die ausgebildet ist, die ermittelte Solltrajektorie an das Fahrzeug (601) über ein Kommunikationsnetzwerk zu senden, so dass das Fahrzeug (601) basierend auf der Solltrajektorie autonom auf dem Parkplatz fahren kann, wobei zumindest ein Lokalisierungssynchronisationsort ermittelt wird, mittels welchen das Fahrzeug (601) überprüfen kann, ob es die ermittelte Solltrajektorie korrekt abfährt, wobei der Lokalisierungssynchronisationsort über das Kommunikationsnetzwerk an das Fahrzeug (601) gesendet wird, so dass das Fahrzeug (601) beim Abfahren der Solltrajektorie mittels des Lokalisierungssynchronisationsorts überprüfen kann, ob es die Solltrajektorie korrekt abfährt, wobei das Ermitteln des Lokalisierungssynchronisationsorts umfasst, dass Positionsdaten des Lokalisierungssynchronisationsorts relativ zu der Solltrajektorie ermittelt werden, **dadurch gekennzeichnet, dass** davon abgesehen wird, eine digitale Karte des Parkplatzes an das Fahrzeug (601) über das Kommunikationsnetzwerk zu senden.

6. Parksystem (501) für Fahrzeuge (601), umfassend einen Parkplatz (503) und die Vorrichtung (201) nach Anspruch 5.

7. Computerprogramm, umfassend Programmcode zur Durchführung des Verfahrens nach einem der Ansprüche 1 bis 4, wenn das Computerprogramm auf einem Computer ausgeführt wird.

## Claims

1. Method for the assisted driving of a vehicle (601), wherein a setpoint trajectory, to be travelled along in a car park, for the vehicle (601) is determined (101) in accordance with a vehicle type of the vehicle (601), wherein the determined setpoint trajectory is transmitted (103) to the vehicle (601) via a communication network, so that the vehicle (601) can travel autonomously in the car park on the basis of the setpoint trajectory, wherein at least one position-determination-synchronization location is determined by means of which the vehicle (601) can check whether it is travelling along the determined setpoint trajectory correctly, wherein the position-determination-synchronization location is transmitted to the vehicle (601) via the communication network, so that when the vehicle (601) travels along the setpoint trajectory it can check by means of the position-determination-synchronization location whether it is travelling along the setpoint trajectory correctly, wherein the determination of the position-determination-synchronization location comprises determining position data of the position-determination-synchronization location relative to the setpoint trajectory, **characterized in that** a digital map of the car park is not transmitted to the vehicle (601) via the communication network.

2. Method according to Claim 1, wherein the setpoint trajectory is also determined in accordance with at least one of the following vehicle parameters: wheel base, height, width, length, mass, functional scope of a driver assistance system, functional scope of a surroundings sensor system, maximum wheel lock angle, turning circle, inaccuracy of a driver assistance system and inaccuracy of a surroundings sensor system, respective type and/or a respective inaccuracy level of one or more actuators, for example brake system, steering system, drive, and/or of a processing device for calculating actuation parameters for one or more actuators, in order to be able to travel along the setpoint trajectory.

3. Method according to one of the preceding claims, wherein before a transfer is carried out at least one part of the determined setpoint trajectory is approximated by a straight line or a sequence of points so that instead of the determined setpoint trajectory the setpoint trajectory with the approximated part is transmitted to the vehicle (601) via the communication network.

4. Method according to one of the preceding claims, wherein the setpoint trajectory comprises at least one of the following locations in the car park:
a handover position at which a driver of the vehicle (601) can hand over his vehicle (601) for an autonomous parking process, a parked position in which the vehicle (601) parks in the car park, a retrieval position at which a driver of the vehicle (601) can retrieve at the end of an autonomous parking process.

5. Device (201) for the assisted driving of a vehicle (601), comprising a processor (203) which is designed to determine a setpoint trajectory, to be travelled along in a car park, for the vehicle (601) in accordance with a vehicle type of the vehicle (601), and a communication interface (205) which is designed to transmit the determined setpoint trajectory to the vehicle (601) via a communication network, so that the vehicle (601) can travel autonomously in the car park on the basis of the setpoint trajectory, wherein at least one position-determination-synchronization location is determined by means of which the vehicle (601) can check whether it is travelling along the determined setpoint trajectory correctly, wherein the position-determination-synchronization location is transmitted to the vehicle (601) via the communication network, so that when the vehicle (601) travels along the setpoint trajectory it can check by means of the position-determination-synchronization location whether it is travelling along the setpoint trajectory correctly, wherein the determination of the position-determination-synchronization location comprises determining position data of the position-determination-synchronization location relative to the setpoint trajectory, **characterized in that** a digital map of the car park is not transmitted to the vehicle (601) via the communication network.

6. Parking system (501) for vehicles (601), comprising a car park (503) and the device (201) according to Claim 5.

7. Computer program comprising program code for carrying out the method according to one of Claims 1 to 4 when the computer program is run on a computer.

## Revendications

1. Procédé de guidage assisté d'un véhicule (601), une trajectoire de consigne pour le véhicule (601) à parcourir sur une aire de stationnement étant déterminée (101) en fonction d'un type de véhicule du véhicule (601), la trajectoire de consigne déterminée étant envoyée (103) au véhicule (601) par le biais d'un réseau de communication, de sorte que le véhicule (601) peut se déplacer de manière autonome sur l'aire de stationnement en se basant sur la trajectoire de consigne, au moins un lieu de synchronisation de localisation étant déterminé, au moyen duquel le véhicule (601) peut vérifier s'il parcourt correctement la trajectoire de consigne déterminée, le lieu de synchronisation de localisation étant envoyé au véhicule (601) par le biais du réseau de communication de sorte que le véhicule (601), en parcourant la trajectoire de consigne, peut vérifier au moyen du lieu de synchronisation de localisation, s'il parcourt correctement la trajectoire de consigne, la détermination du lieu de synchronisation de localisation comprenant la détermination des données de position du lieu de synchronisation de localisation par rapport à la trajectoire de consigne, **caractérisé en ce qu'**il y a renonciation à envoyer une carte numérique de l'aire de stationnement au véhicule (601) par le biais du réseau de communication.

2. Procédé selon la revendication 1, la trajectoire de consigne étant en plus déterminée en fonction d'au moins l'un des paramètres de véhicule suivants : empattement, hauteur, largeur, longueur, masse, étendue fonctionnelle d'un système d'assistance au conducteur, étendue fonctionnelle d'un système de détection de l'environnement, angle de braquage des roues maximal, cercle de braquage, imprécision d'un système d'assistance au conducteur et imprécision d'un système de détection de l'environnement, type respectif et/ou une imprécision respective d'un ou de plusieurs actionneurs, par exemple freins, direction, groupe propulseur et/ou d'un dispositif de traitement destiné à calculer des paramètres de commande pour un ou plusieurs actionneurs, en vue de pouvoir parcourir la trajectoire de consigne.

3. Procédé selon l'une des revendications précédentes, au moins un tronçon de la trajectoire de consigne déterminée étant approché par approximation par une droite ou une séquence de points avant une communication, de sorte qu'au lieu de la trajectoire de consigne déterminée, c'est la trajectoire de consigne avec le tronçon approché par approximation qui est envoyé au véhicule (601) par le biais du réseau de communication.

4. Procédé selon l'une des revendications précédentes, la trajectoire de consigne comprenant au moins l'un des emplacements suivants sur l'aire de stationnement : position de dépose, à laquelle un conducteur du véhicule (601) peut déposer son véhicule (601) pour une opération de stationnement autonome, position de stationnement dans laquelle le véhicule (601) stationne sur l'aire de stationnement, position de récupération, à laquelle un conducteur du véhicule (601) peut récupérer après la fin de l'opération de stationnement autonome.

5. Arrangement (201) de guidage assisté d'un véhicule (601), comprenant un processeur (203) qui est configuré pour déterminer une trajectoire de consigne pour le véhicule (601) à parcourir sur une aire de stationnement en fonction d'un type de véhicule du véhicule (601), et une interface de communication (205) qui est configurée pour envoyer la trajectoire de consigne déterminée au véhicule (601) par le biais d'un réseau de communication, de sorte que le véhicule (601) peut se déplacer de manière autonome sur l'aire de stationnement en se basant sur la trajectoire de consigne, au moins un lieu de synchronisation de localisation étant déterminé, au moyen duquel le véhicule (601) peut vérifier s'il parcourt correctement la trajectoire de consigne déterminée, le lieu de synchronisation de localisation étant envoyé au véhicule (601) par le biais du réseau de communication de sorte que le véhicule (601), en parcourant la trajectoire de consigne, peut vérifier au moyen du lieu de synchronisation de localisation, s'il parcourt correctement la trajectoire de consigne, la détermination du lieu de synchronisation de localisation comprenant la détermination des données de position du lieu de synchronisation de localisation par rapport à la trajectoire de consigne, **caractérisé en ce qu'**il y a renonciation à envoyer une carte numérique de l'aire de stationnement au véhicule (601) par le biais du réseau de communication.

6. Système de stationnement (501) pour véhicules (601), comprenant une aire de stationnement (503) et le dispositif (201) selon la revendication 5.

7. Programme informatique, comprenant un code de programme destiné à mettre en œuvre le procédé selon l'une des revendications 1 à 4 lorsque le programme informatique est exécuté sur un ordinateur.
